# EUROPEAN PATENT SPECIFICATION

(11) **EP 1 544 510 B1**
(45) Date of publication and mention of the grant of the patent: **07.11.2012**
(21) Application number: 04030038.6
(22) Date of filing: 17.12.2004
(51) Int. Cl.: F16H 57/04

(54) **Structure of lubricating differential apparatus**
Vorrichtung zur Schmierung eines Differentials
Structure de lubrication d'un différentiel

(30) Priority: 19.12.2003 JP 2003421974
(43) Date of publication of application: 22.06.2005
(73) Proprietor: HONDA MOTOR CO., LTD., Tokyo (JP)
(72) Inventor: Koyama, Shigeru c/o Honda R&D Co., Ltd., Wako-shi Saitama (JP); Sakai, Kunihiko c/o Honda R&D Co., Ltd., Wako-shi Saitama (JP); Kimura, Hiroyuki c/o Honda R&D Co., Ltd., Wako-shi Saitama (JP); Murata, Toshiki c/o Honda R&D Co., Ltd., Wako-shi Saitama (JP)
(74) Representative: Prechtel, Jörg

(56) References cited:
- JP-A- 5 157 157
- JP-A- 6 072 168
- JP-U- 62 194 242
- JP-U- 63 103 056

## Description

### BACKGROUND OF THE INVENTION

The present invention relates to a structure of lubricating a differential apparatus for an automobile.

In a structure of lubricating a differential apparatus integrally integrated to a manual transmission for an automobile, generally, there is constructed a constitution in which a differential apparatus, and a final driven gear attached to a differential case of the differential apparatus are arranged at inside of a transmission case, and lubrication is carried out by stirring up a lubricant stored in the transmission case by utilizing rotation of the final driven gear.

When an inboard portion (boss portion) of the differential apparatus is lubricated in normal way, there is known a structure in which a guide groove for guiding the lubricant to a side of the transmission case is provided, and the lubricant is guided to a space between an oil seal and a bearing to lubricate the inboard portion of the differential apparatus.

According to the above-described structure of lubricating the differential apparatus of the background art, a shape of the space between the oil seal and the bearing is constituted by a shape of a concentric circle and therefore, a flow of oil driven to rotate by rotation of an axle interferes with a flow of oil advancing from the guide groove, and it is difficult to sufficiently supply the lubricant to the inboard portion of the differential apparatus.

Particularly, the tendency is significant in a high speed region of a vehicle, and in the background art, the tendency is dealt with by increasing an amount of oil, or enlarging the guide groove. However, when a width of the guide groove of the lubricant is enlarged, the enlargement is accompanied by a considerable reduction in a case rigidity and therefore, the enlargement is not preferable.

JP 62194242 U discloses a structure of lubricating a differential apparatus including a differential case for rotatably supporting axles by inboard portions and a final driven gear attached to the differential case and rotatably attached to a transmission case, the structure being configured in accordance with the preamble part of claim 1.

### SUMMARY OF THE INVENTION

Therefore, it is an object of the invention to provide a structure of lubricating a differential apparatus capable of promoting a lubricating function without increasing an amount of lubricant or enlarging a width of a guide groove of the lubricant.

According to the invention, there is provided a structure of lubricating a differential apparatus according to claim 1.

In such constitution, the lubricant stirred up by the final driven gear impinges on the inner face of the transmission case and is introduced into the eccentric ring-like groove via the lubricant guide groove. Since the ring-like groove is eccentric in the direction of the one end of the lubricant guide groove, the ring-like groove is formed widely in a width thereof at the position of the one end of the lubricant guide groove.

Therefore, the lubricant guided by the lubricant guide groove is easily received by the portion of the ring-like groove the width of which is widened, further, since the rib is provided in the ring-like groove at the vicinity of the one end of the lubricant guide groove at which the lubricant flows into the ring-like groove, a flow of the lubricant driven to rotate by rotation of the axle and a flow of the lubricant advancing from the lubricant guide groove can be avoided from being interfered with each other. As a result, the inboard portion of the differential apparatus can efficiently be lubricated.

### BRIEF DESCRIPTION OF THE DRAWINGS

Fig.1 is a vertical sectional view of a manual transmission integrated with a differential apparatus having a lubricating structure of the invention.
Fig.2 is a vertical sectional view of the differential apparatus having the lubricating structure of the invention.
Fig. 3 is a perspective view showing a lubricant guide groove and a ring-like groove formed at a transmission case according to the embodiment of the invention.
Fig.4 is a plane view showing the lubricant guide groove and the ring-like groove according to the embodiment of the invention.

### DETAILED DESCRIPTION OF THE PREFERRED EMBODIMENTS

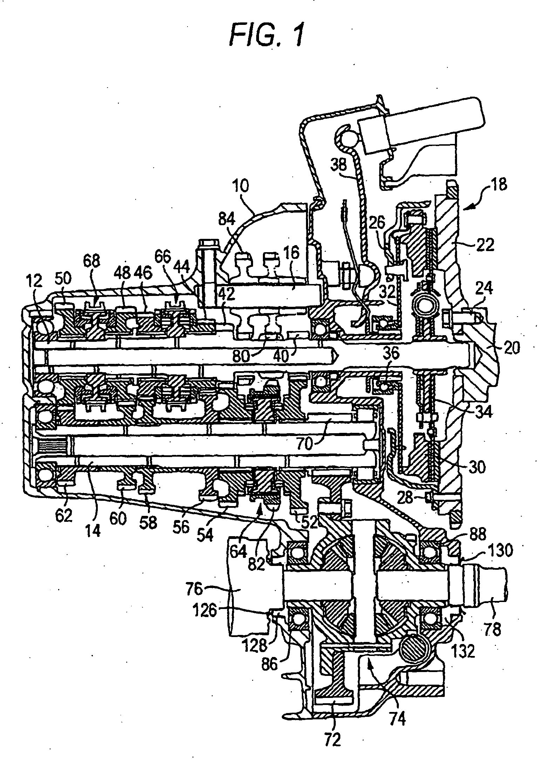

In reference to Fig.1, there is shown a vertical sectional view of a manual transmission integrated with a differential apparatus adopting a lubricating structure of the invention.

A main shaft (input shaft) 12 and a counter shaft (output shaft) 14 are rotatably supported by a transmission case 10, and both ends of a reverse shaft 16 are fixedly supported thereby. The main shaft 12, the counter shaft 14 and the reverse shaft 16 are arranged in parallel with each other.

Notation 18 designates a shift clutch, and a flywheel 22 of the shift clutch 18 is connected to a crankshaft 20 of an engine by a bolt 24. A clutch cover 26 is fixed to the flywheel 22 by a bolt 28. The clutch cover 26 is attached with a pressure plate 30 by a rivet, not illustrated, movably in an axial direction.

The clutch cover 26 is attached with a diaphragm spring 32, and an outer peripheral end portion thereof urges to press the pressure plate 30. A clutch disk 34 is interposed between the flywheel 22 and the pressure plate 30.

In an illustrated clutch ON state, the pressure plate 30 is solidly pressed to a facing of the clutch disk 34 by an urging force of the diaphragm spring 32, and rotation of the flywheel 22 is directly transmitted to the main shaft 12 via the clutch disk 34.

A release bearing 36 is attached slidably in an axial direction and when a clutch pedal is depressed, the release bearing 36 is moved in a right direction of Fig.1 by a release fork 38. Thereby, the urging force of the diaphragm spring 32 is released, a clutch OFF state is brought about, and transmission of a rotational force of the crankshaft 20 to the main shaft 12 via the clutch 18 is cut.

A first speed drive gear 40 and a second speed driven gear 42 are fixedly installed at the main shaft 12, and a third speed drive gear 44, a fourth speed drive gear 46, a fifth speed drive gear 48 and a sixth speed drive gear 50 are supported thereby rotatably relative to each other.

Meanwhile, a first speed driven gear 52 and a second speed driven gear 54 respectively brought in mesh with the first speed drive gear 40 and the second speed drive gear 42 are supported by the counter shaft 14 rotatably to each other, and a third speed driven gear 56, a fourth speed driven gear 58, a fifth speed driven gear 60 and a sixth speed driven gear 62 respectively brought in mesh with the third speed drive gear 44, the fourth speed drive gear 46, the fifth speed drive gear 48 and the sixth speed drive gear 50 are fixedly installed thereto.

Switching of respective shift gear stages is carried out by three of synchromesh mechanisms 64, 66 and 68. The first synchromesh mechanism 64 is provided on the counter shaft 14 between the first speed driven gear 52 and the second speed driven gear 54.

The second synchromesh mechanism 66 is provided on the main shaft 12 between the third speed drive gear 44 and the fourth speed drive gear 46. The third synchromesh mechanism 68 is provided on the main shaft 12 between the fifth speed drive gear 48 and the sixth speed drive gear 50.

Except a shift change time period, power of the main shaft 12 is transmitted to the counter shaft 14 via the shift gear stage selected by operating the synchromesh mechanisms 64, 66 and 68.

Further, after speed is reduced by a final gear ratio of a final speed reducing mechanism constituted by a final drive gear 70 and a final driven gear 72, power is transmitted to a differential apparatus 74. Thereby, left and right drive wheels are rotated in a forward moving direction via left and right axles 76, 78.

Meanwhile, in reward moving, first, all of the synchromesh mechanisms 64 through 68 are set to a neutral state. Although a reverse drive gear 80 fixedly attached to the main shaft 12 and a reverse driven gear 82 attached to an outer periphery of the synchromesh mechanism 64 unrotatably are not directly brought in mesh with each other, the reverse drive gear 80 and the reverse driven gear 82 are arranged in a state of being aligned in one row.

Under the state, a reverse idler gear 84 rotatably and slidably attached onto the reverse shaft 16 is slid in an axial direction on the reverse shaft 16 and is brought in mesh with both of the reverse drive gear 80 and the reverse driven gear 82.

Thereby, power of the main shaft 12 is transmitted to the counter shaft 14 via the reverse drive gear 80, the reverse idler gear 84 and the reverse driven gear 82.

In moving rearward, power is transmitted to the counter shaft 14 via the reverse idler gear 84 and therefore, a direction of rotating the counter shaft 14 is reversed to that in forward moving and the drive wheels are rotated in a rearward moving direction.

Further, although in Fig.1, in order to clarify structures of the reverse shaft 16 and the reverse idler gear 84, the reverse shaft 16 and the reverse idler gear 84 are illustrated on upper sides of the reverse drive gear 80 and the reverse driven gear 82, please take note that actually, the reverse idler gear 84 is present at a position at which the reverse idler gear 84 canbe brought in mesh with both of the reverse drive gear 80 and the reverse driven gear 82.

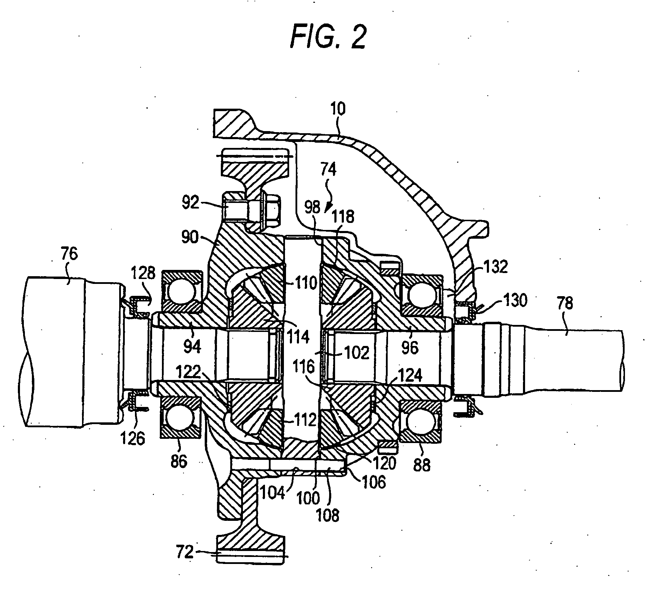

Next, a detailed explanation will be given of a structure of the differential apparatus 74 in reference to Fig.2. Further, in Fig.2, only a portion of the transmission case 10 is illustrated. The differential apparatus 74 includes a differential case 90 rotatably supported by the transmission case 10 via a pair of ball bearings 86, 88.

The differential case 90 is fixed with the final driven gear 72 by a plurality pieces of bolts 92 (only one piece is illustrated). The differential case 90 includes a pair of inboard portions (boss portion) 94, 96 extended in a left and right direction of a vehicle body. A shaft end portion of the left axle 76 is rotatably supported by an inner periphery of the inboard portion 94 on the left side and a shaft end portion of the right axle 78 is rotatably supported by an inner periphery of the inboard portion 96 on the right side.

A pinion shaft 102 is supported by a pair of pinion shaft supporting holes 98, 100 formed at the differential case 90 to dispose between end portions of the two axles 76, 78 opposed to each other and to be orthogonal to axis lines of the two axles 76, 78.

The pinion shaft 102 is fixed to the differential case 90 unrotatably and uninsertably and undrawably by inserting a pin 108 through a pin hole 104 formed at one end thereof and a pin hole 106 formed at the differential case 90.

A pair of differential pinions 110, 112 are rotatably supported by the pinion shaft 102, and a pair of drive pinions 114, 116 brought in mesh with the pair of differential pinions 110, 112 are respectively coupled to the left axle 76 and the right axle 78 by spline coupling.

Thrust washers 118, 120 in a shape of a curved face are interposed between rear faces of the differential pinions 110, 112 and the differential case 90, and thrust washers 122, 124 in a shape of a plane are interposed between the drive pinions 114, 116 and the differential case 90.

Between an oil seal 126 and the ball bearing 86 on the left side provided between the left axle 76 and the transmission case 10, there is formed a ring-like groove (ring-like space) 128 for supplying a lubricant stirred up by the final driven gear 72 to scatter and collected by passing a lubricant guide groove provided at the transmission case 10 (also refer to Fig.1).

Similarly, between an oil seal 130 and the ball bearing 88 on the right side provided between the right axle 78 and the transmission case 10, there is formed another ring-like groove (ring-like space) 132 for supplying the lubricant stirred up by the final driven gear 72 to scatter and collected by passing a lubricant guide groove provided at the transmission case 10.

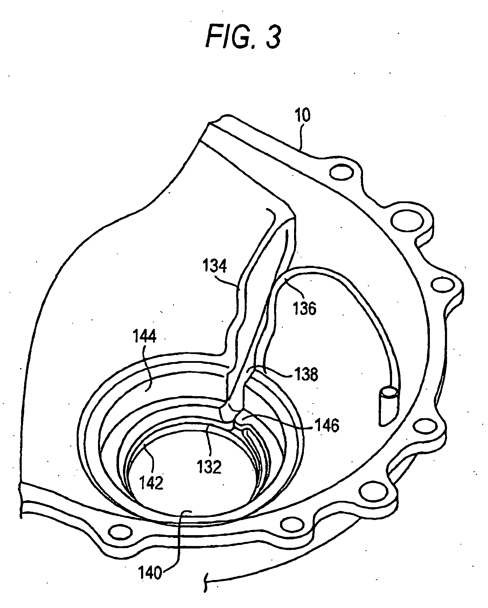

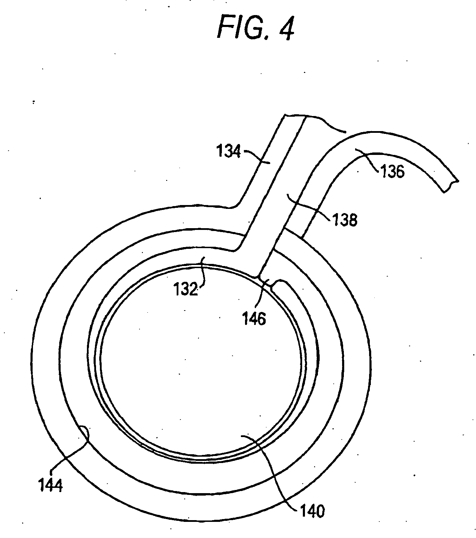

A detailed explanation will be given of a structure of lubricating the differential apparatus according to the embodiment of the invention in reference to Fig.3 and Fig.4 as follows.

Although Fig.3 and Fig.4 show a structure of lubricating the inboard portion 96 on the right side of the differential apparatus 74, also a structure of lubricating the inboard portion 94 on the left side is formed to be substantially the same as the structure of lubricating the inboard portion 96 on the right side to be explained hereinafter. Fig.3 is a perspective view of the lubricating structure of the embodiment, and Fig.4 is a plane view thereof.

The transmission case 10 is formed with a hole 140 to be inserted with the right axle 78, and the oil seal 130 is attached to an inner peripheral wall 142 of the transmission case 10 partitioning the hole 140. Notation 144 designates a seating portion attached with an outer lace of the ball bearing 88.

An inner face of the transmission case 10 is formed with a lubricant guide groove 138 partitioned by guiding ribs 134, 136. The lubricant guide groove 138 is for collecting the lubricant stirred up by the final driven gear 72 to scatter to impinge on the inner face of the case 10 and guiding the lubricant to supply to the ring-like groove (ring-like space) 132.

As is apparent in reference to Fig.4, the ring-like groove 132 is formed such that a center thereof is eccentric in a direction of the lubricant guide groove 138 relative to an axis line of the right axle 78 (center of the hole 140). The eccentricity is, for example, about 2mm. An end rib 146 for cutting communication of the ring-like groove 132 in a circumferential direction is formed at a vicinity of a position of connecting the lubricant guide groove 138 and the ring-like groove 132.

According to the embodiment, the ring-like groove 132 is formed to be eccentric in the direction of the lubricant guide groove 138 relative to the center of the hole 140 and therefore, a width of the ring-like groove 132 can widely be formed at the position of connecting the lubricant guide groove 138 and the ring-like groove 132. Therefore, the lubricant can easilybe supplied from the lubricant guide groove 138 into the ring-like groove 132 in comparison with the structure of the background art having a ring-like groove in a shape of a concentric circle.

Further, since the end rib 146 for cutting communication of the ring-like groove 132 in the circumferential direction is formed at the vicinity of the position of connecting the lubricant guide groove 138 and the ring-like groove 132, a flow of the lubricant driven to rotate by rotation of the axle 78 can be prevented from being interfered with a flow of the lubricant supplied from the lubricant guide groove 138, and a necessary and sufficient amount of the lubricant can be supplied to the inboard portion 96 of the differential apparatus 74. As a result, the lubricating function can be promoted without changing a groove width of the lubricant guide groove which is accompanied by an increase in the amount of the lubricant and a considerable reduction in the case rigidity.

According to the structure of lubricating the differential apparatus of the invention, there is achieved an effect of capable of sufficiently lubricating the inboard portion of the differential apparatus without enlarging the width of the guide groove of the lubricant accompanied by an increase in the lubricant supplied or a considerable reduction in the rigidity of the transmission case.

## Claims

1. A structure of lubricating a differential apparatus (74) including a differential case (90) for rotatably supporting axles (76, 78) by inboard portions (94, 96), and a final driven gear (72) attached to the differential case (90) and rotatably attached to a transmission case (10),
the structure of lubricating the differential apparatus (74) comprising:
bearings (86, 88) for supporting the differential case (90) rotatably relative to the transmission case (10);
oil seals (126, 130) attached between the transmission case (10) and the respective axles (76, 78) on the outer sides of the respective bearings (86, 88) adjacent to the transmission case (10);
lubricant guide grooves (138) which are formed respectively at transmission case (10) inner faces on both sides of the transmission case (10) adjacent to the oil seals (126, 130) and in which ends thereof on one side communicate with intervals between the respective bearings (86, 88) and the respective oil seals (126, 130); and
ring-like grooves (128, 132) which are formed at the transmission case (10) inner faces between the respective bearings (86, 88) and the respective oil seals (126, 130) on the both sides of the transmission case (10) adjacent to the oil seals (126, 130);
**characterized by** end ribs (146) respectively formed at vicinities of the ends on one side of the respective lubricant guide grooves (138) for cutting communication of the respective ring-like grooves (128, 132) in circumferential directions;
wherein the centers of the ring-like grooves (128, 132) are eccentric in directions of the ends on one side of the respective lubricant guide grooves (138) relative to axis lines of the axles (76, 78).

## Patentansprüche

1. Schmierungsstruktur einer Differentialvorrichtung (74), die ein Differentialgehäuse (90) zum drehbaren Lagern von Achsen (76, 78) durch innere Abschnitte (94, 96) sowie ein Endabtriebszahnrad (72), das an dem Differentialgehäuse (90) angebracht ist und an einem Getriebegehäuse (10) drehbar angebracht ist, enthält,
wobei die Schmierungsstruktur der Differentialvorrichtung (74) umfasst:
Lager (86, 88) zum drehbaren Lagern des Differentialgehäuses (90) relativ zu dem Getriebegehäuse (10);
Öldichtungen (126, 130), die zwischen dem Getriebegehäuse (10) und den jeweiligen Achsen (76, 78) an den Außenseiten der jeweiligen Lager (86, 88) benachbart dem Getriebegehäuse (10) angebracht sind;
Schmiermittelführungsnuten (138), die jeweils an Innenseiten des Getriebegehäuses (10) an beiden Seiten des Getriebegehäuses (10) benachbart den Öldichtungen (126, 130) ausgebildet sind, und worin deren Enden an einer Seite mit Intervallen zwischen den jeweiligen Lagern (86, 88) und den jeweiligen Öldichtungen (126, 130) in Verbindung stehen; und
ringartige Nuten (128, 132), die an den Innenseiten des Getriebegehäuses (10) zwischen den jeweiligen Lagern (86, 88) und den jeweiligen Öldichtungen (126, 130) an beiden Seiten des Getriebegehäuses (10) benachbart den Öldichtungen (126, 130) ausgebildet sind, **gekennzeichnet durch** Endrippen (146), die jeweils in der Nähe der Enden an einer Seite der jeweiligen Schmiermittelführungsnuten (138) ausgebildet sind, und die Verbindung der jeweiligen ringartigen Nuten (128, 132) in Umfangsrichtungen unterbrechen;
worin die Mitten der ringartigen Nuten (128, 132) in Richtungen der Enden an einer Seite der jeweiligen Schmiermittelführungsnuten (138) relativ zu den Achslinien der Achsen (76, 78) exzentrisch sind.

## Revendications

1. Structure de lubrification d'un différentiel (74) incluant un carter de différentiel (90) pour supporter des axes (76, 78) de manière permettant la rotation à l'aide de parties intérieures (94, 96) et un engrenage entraîné final (72) attaché au carter du différentiel (90) et attaché de manière permettant la rotation à un carter de transmission (10),
la structure de lubrification du différentiel (74) comprenant:
des paliers (86, 88) pour supporter le carter de différentiel (90) de manière permettant la rotation relativement au carter de transmission (10);
des joints d'huile (126, 130) attachés entre le carter de transmission (10) et les axes respectifs (76, 78) sur les côtés extérieurs des paliers respectifs (86, 88) adjacents au carter de transmission (10);
des rainures de guidage de lubrifiant (138) qui sont formées respectivement aux faces intérieures du carter de transmission (10) des deux côtés du carter de transmission (10) adjacents aux joints d'huile (126, 130) et aux extrémités de celles-ci communiquent d'un côté avec des intervalles entre les paliers respectifs (86, 88) et les joints d'huile respectifs (126, 130); et
des rainures annulaires (128, 132) qui sont formées aux faces intérieures du carter de transmission (10) entre les paliers respectifs (86, 88) et les joints d'huile respectifs (126, 130) des deux côtés du carter de transmission (10) adjacents aux joints d'huile (126, 130);
**caractérisée par** des nervures d'extrémité (146) formées respectivement à proximité des extrémités d'un côté des rainures de guidage respectives de lubrifiant (138) pour couper la communication des rainures annulaires respectives (128, 132) dans les directions circonférentielles;
dans laquelle les centres des rainures annulaires (128, 132) sont excentriques dans les directions des extrémités d'un côté des rainures de guidage respectives de lubrifiant (138) relativement aux lignes d'axes des axes (76, 78).
